# EUROPÄISCHE PATENTSCHRIFT

(11) **EP 2 560 865 B1**
(45) Veröffentlichungstag und Bekanntmachung des Hinweises auf die Patenterteilung: **14.06.2017**
(21) Anmeldenummer: 11713188.8
(22) Anmeldetag: 05.04.2011
(51) Int. Cl.: B64C 1/06

(54) **FLUGZEUGINNENAUSSTATTUNGSBAUTEIL UND FLUGZEUGINNENAUSSTATTUNGSBAUTEILSYSTEM**
AIRCRAFT INTERIOR EQUIPMENT COMPONENT AND AIRCRAFT INTERIOR EQUIPMENT COMPONENT SYSTEM
ÉLÉMENT D'ÉQUIPEMENT INTÉRIEUR D'AVION ET SYSTÈME D'ÉLÉMENTS D'ÉQUIPEMENT INTÉRIEUR D'AVION

(30) Priorität: 20.04.2010 US 325880 P; 20.04.2010 DE 102010017822
(43) Veröffentlichungstag der Anmeldung: 27.02.2013
(60) Teilanmeldung: 15002126.9
(73) Patentinhaber: Airbus Operations GmbH, 21129 Hamburg (DE)
(72) Erfinder: HOETZELDT, Stephan, 28215 Bremen (DE)
(74) Vertreter: Schicker, Silvia
(86) Internationale Anmeldenummer: PCT/EP2011/001689
(87) Internationale Veröffentlichungsnummer: WO 2011/131290

(56) Entgegenhaltungen:
- EP-A2- 1 449 764
- DE-A1- 19 916 838
- DE-A1-102007 013 819
- DE-C1- 4 340 002
- GB-A- 498 323
- US-A- 3 423 121
- US-A- 4 597 549

## Beschreibung

Die vorliegende Erfindung betrifft ein Flugzeuginnenausstattungsbauteil sowie ein Flugzeuginnenausstattungsbauteilsystem.

Gegenwärtig als Flugzeuginnenausstattungsbauteile eingesetzte Elemente umfassen eine Grundstruktur, die üblicherweise als starre Sandwich-/Honigwabenstruktur ausgebildet ist. Die maximalen Abmessungen von eine starre Grundstruktur aufweisenden Flugzeuginnenausstattungsbauteilen sind durch das Erfordernis festgelegt, die Bauteile zur Montage durch die Türen in den Flugzeugrumpf transportieren zu müssen. Die somit vergleichsweise klein dimensionierten Bauteile werden dann einzeln im Innenraum des Flugzeugrumpfs verbaut.

Aus der DE 10 2007 013 819 A1 ist ein Flugzeuginnenausstattungsbauteil bekannt, das eine durch ein bedruckbares Kammersystem gebildete Tragstruktur umfasst. Mit der Tragstruktur ist eine Membran aus einem drapierfähigen Material verbunden. Im unbedruckten Zustand des die Tragstruktur bildenden Kammersystems kann das in der DE 10 2007 013 819 A1 beschriebene Flugzeuginnenausstattungsbauteil auf ein verhältnismäßig kleines Volumen "zusammengefaltet" und durch eine Tür in einen Flugzeugrumpf transportiert werden. Vor der Montage des Flugzeuginnenausstattungsbauteils in seiner Endmontageposition in dem Flugzeugrumpf muss das die Tragstruktur des Flugzeuginnenausstattungsbauteils bildende Kammersystem jedoch zuerst mittels eines Kompressors oder dergleichen mit einem Innendruck beaufschlagt werden, der ausreichend ist, um der Tragstruktur des Flugzeuginnenausstattungsbauteils die erforderliche strukturelle Tragfähigkeit zu verleihen.

Aus der US34231231 ist ein weiteres Flugzeuginnenausstattungsbauteil bekannt.

Unabhängig von der Ausgestaltung der Grundstruktur eines Flugzeuginnenausstattungsbauteils besteht ein weiteres Problem bei der Montage von Flugzeuginnenausstattungsbauteilen in einem Flugzeug darin, dass es zumindest in einigen Bereichen des Flugzeugs erwünscht oder erforderlich ist, Schnittstellen zwischen benachbarten Flugzeuginnenausstattungsbauteilen gasundurchlässig zu gestalten. Dies geschieht derzeit in einem separaten Arbeitsschritt durch Abdichten der Schnittstellen mit einem geeigneten Material, wie zum Beispiel Klebebandstreifen. Dies ist zeit-, personal- und kostenintensiv.

Der Erfindung liegt die Aufgabe zugrunde, ein Flugzeuginnenausstattungsbauteil bereitzustellen, das einfach und kostengünstig in einem Flugzeug installiert werden kann. Ferner ist die Erfindung auf die Aufgabe gerichtet, ein Flugzeuginnenausstattungsbauteilsystem bereitzustellen, das mehrere abdichtend miteinander verbundene Flugzeuginnenausstattungsbauteile umfasst und dennoch einfach und kostengünstig in einem Flugzeug installiert werden kann.

Diese Aufgabe wird durch ein Flugzeuginnenausstattungsbauteil mit den Merkmalen des Anspruch 1 sowie ein Flugzeuginnenausstattungsbauteilsystem mit den Merkmalen des Anspruchs 6 gelöst.

Das erfindungsgemäße Flugzeuginnenausstattungsbauteil umfasst einen Rahmen mit zwei starren Rahmenabschnitten und ein Gelenk, welches die zwei starren Rahmenabschnitte miteinander verbindet. Ferner umfasst das Flugzeuginnenausstattungsbauteil einen von dem Rahmen getragenen Flächenabschnitt, welcher durch eine mit dem Rahmen verbundene biegsame und/oder faltbare Membran gebildet wird. Die starren Rahmenabschnitte bilden eine zumindest abschnittsweise unbiegsame und/oder unfaltbare Tragestruktur. Die biegsame und/oder faltbare Membran kann beispielsweise als eine zwei- oder dreidimensionale, als ebene oder gekrümmte, als dreieckige, rechteckige, quadratische oder parallelogrammförmige Membranfläche ausgebildet sein. In Kombination mit der biegsamen und/oder faltbaren Membran und dem die zwei starren Rahmenabschnitte verbindenden Gelenk weist das Flugzeuginnenausstattungsbauteil somit eine semi-rigide Grundstruktur auf.

Die semi-rigide Grundstruktur erlaubt es, das Flugzeuginnenausstattungsbauteil zumindest abschnittsweise zu verformen. Somit kann das Flugzeuginnenausstattungsbauteil für den Transport zum Montageort, an welchem das Flugzeuginnenausstattungsbauteil in dem das Flugzeuginnenausstattungsbauteil aufnehmenden Flugzeug installiert wird, in einen Transportzustand verformt werden, wobei sich der Transportzustand des Flugzeuginnenausstattungsbauteils gegenüber dem im Flugzeug montierten Zustand des Flugzeuginnenausstattungsbauteils durch eine verkleinerte und/oder räumlich kompaktere Abmessung auszeichnet. Das Flugzeuginnenausstattungsbauteil kann somit auf komfortable Art und Weise in seine Endmontageposition in dem Flugzeug transportiert und dort rasch und einfach installiert werden, ohne dass weitere Zwischenschritte zur Vorbereitung des Flugzeuginnenausstattungsbauteils zur Installation erforderlich sind.

Vorzugsweise umfasst das Flugzeuginnenausstattungsbauteil eine Mehrzahl von zwei starre Rahmenabschnitten miteinander verbindenden Gelenken, die auf einer gedachten Faltungslinie angeordnet sind, um welche sich das Flugzeuginnenausstattungsbauteil biegen und/oder falten lässt. Die Faltungslinie verläuft innerhalb des Flugzeuginnenausstattungsbauteils vorzugsweise derart, dass bei einer Faltung und/oder Biegung des Flugzeuginnenausstattungsbauteils um die Faltungslinie die räumliche Abmessung des Flugzeuginnenausstattungsbauteils entlang mindestens einer Raumrichtung deutlich reduziert wird. Das Flugzeuginnenausstattungsbauteil kann auch entlang einer Mehrzahl von gedachten Faltungslinien bieg- oder faltbar sein, wobei sich die Faltungslinien schneiden, zueinander beliebige Abstände aufweisen und/oder zueinander beliebig ausgerichtet sein können.

Das Gelenk/die Gelenke ist/sind zum Beispiel durch Aussparungen in dem Rahmen, durch unverstärkte, verjüngte, biegsame und/oder faltbare Abschnitte des Rahmens und/oder durch einstückig mit dem von dem Rahmen getragenen Flächenabschnitt ausgebildete Bereiche der Membran gebildet. Jedes Gelenk ermöglicht es, dass die zwei, mit dem Gelenk verbundenen starren Rahmenabschnitte relativ zueinander bewegt werden können. Das Gelenk dient also als eine Art Scharnier, Angel und/oder Bewegungslager zwischen rigiden, unbiegsamen, unfaltbaren, starren und/oder steifen Teilen des Flugzeuginnenausstattungsbauteils. Ein Gelenk kann zwei oder mehr als zwei starre Rahmenabschnitte verbinden. Jeder starre Rahmenabschnitt kann anhand eines Gelenks oder mehrerer Gelenke mit einem oder mehreren anderen starren Rahmenabschnitt(en) verbunden sein.

In einer bevorzugten Ausführung des Flugzeuginnenausstattungsbauteils erstreckt sich der Rahmen entlang des Außenumfangs des Flugzeuginnenausstattungsbauteils. Zum Beispiel kann der Rahmen durch flächige, bandförmige Streifen gebildet werden, die zum Beispiel in einem Randbereich der den Flächenabschnitt des Flugzeuginnenausstattungsbauteils bildenden Membran mit der Membran verbunden sind. In dieser Ausführung erfüllt der Rahmen die Funktion einer Randverstärkung für die Membran. Der Rahmen kann mit der Membran punktförmig, linienförmig und/oder flächig verbunden sein.

Ferner umfasst das Flugzeuginnenausstattungsbauteil vorzugsweise eine unbiegsame und/oder unfaltbare Versteifungsstruktur. Beispielsweise ist die Versteifungsstruktur mit der Membran verbunden und erstreckt sich über eine Teilfläche des von dem Rahmen getragenen Flächenabschnitts. Dabei ist die Versteifungsstruktur vorzugsweise derart auf der Membranfläche angeordnet, dass sie von der/den gedachte(n) Faltungslinie(n), um die sich das Flugzeuginnenausstattungsbauteil biegen und/oder falten lässt, nicht geschnitten wird und somit die Bieg- und/oder Faltbarkeit des Flugzeuginnenausstattungsbauteils nicht beeinträchtigt wird. Die Kombination aus Membran und Versteifungsstruktur lässt sich dazu nutzen, die semi-rigide Grundstruktur des Flugzeuginnenausstattungsbauteils je nach Erfordernis für Transport, Montage und/oder Einsatzzweck zu gestalten. Die Versteifungsstruktur kann mit der Membran punktförmig, linienförmig und/oder flächig verbunden sein. Insbesondere kann die Versteifungsstruktur in Form eines Gitters ausgebildet sein. Das Gitter weist dabei vorzugsweise ein schachbrettförmiges Muster aus zueinander senkrecht und/oder parallel verlaufenden Gitterstreben auf. Die Versteifungsstruktur in Form eines Gitters bildet dann eine Matrixstruktur auf der Membranfläche.

Vorzugsweise besteht/bestehen der Rahmen, die Rahmenabschnitte, die Gelenke, die Membran und/oder die Versteifungsstruktur zumindest teilsweise aus einem gasundurchlässigen, schadstoffundurchlässigen, durchbrandfesten und/oder schwer entflammbaren Material.. Insbesondere hält das Flugzeuginnenausstattungsbauteil vorzugsweise hohen Temperaturen stand, ohne sich dabei zu verformen und/oder seine Struktur zu verlieren. Somit kann das Flugzeuginnenausstattungsbauteil als Gasschutz- und/oder Feuerschutztrennelement zwischen zwei Flugzeuginnenbereichen, wie zum Beispiel Frachtraum, Passagierdecks, Bordküche und/oder Cockpit, dienen. Bei Rauchentwicklung, Austritt von Schadstoffen und/oder Ausbruch von Feuer in einem mit dem Flugzeuginnenausstattungsbauteil ausgekleideten Flugzeuginnenbereich kann die Gefahrenquelle isoliert und/oder entschärft werden. Ein Übergreifen des Gefahrenpotenzials auf andere Flugzeuginnenbereiche kann daher verlässlich verhindert werden.

Vorzugsweise besteht/bestehen der Rahmen, die Rahmenabschnitte, die Gelenke, die Membran und/oder die Versteifungsstruktur zumindest teilsweise aus einem thermoplastischen Material, wie zum Beispiel Polyphenolsulfid, Polyethersulfon und/oder Polyetherketon. Diese Materialien sind einfach und vergleichsweise kostengünstig verarbeitbar. Ferner ermöglicht es die Verwendung von thermoplastischen Werkstoffen, die einzelnen Komponenten des Flugzeuginnenausstattungsbauteils thermoplastisch miteinander zu verschweißen.

Vorzugsweise besteht/bestehen der Rahmen, die Rahmenabschnitte, die Gelenke, die Membran und/oder die Versteifungsstruktur zumindest teilsweise aus einem mit Glas, Basalt-, Aramit- und/oder Kohlenstofffasern verstärkten Material. Insbesondere können der Rahmen und/oder die Versteifungsstruktur sogenannte glasfaserverstärkte, unidirektionale Tapes umfassen. Diese Tapes stellen dabei bandförmige, flächige Gewebestreifen dar, wobei die Fasern des Gewebes parallel zu den Tapebegrenzungskanten verlaufen. Die den Rahmen oder die Versteifungsstruktur bildenden Tapes können auf die Membran aufgebracht und dort konsolidiert, d.h. durch Hitze, Druck und/oder Ultraschall thermoplastisch mit der Membran verschweißt werden.

Das erfindungsgemäße Flugzeuginnenausstattungsbauteilsystem umfasst ein erstes Flugzeuginnenausstattungsbauteil, an dem ein Verbindungselement befestigt ist, und ein zweites Flugzeuginnenausstattungsbauteil, an dem ein zu dem Verbindungselement des ersten Flugzeuginnenausstattungsbauteil komplementäres Verbindungselement befestigt ist. Das Verbindungselement des ersten Flugzeuginnenausstattungsbauteils und das Verbindungselement des zweiten Flugzeuginnenausstattungsbauteils sind dazu eingerichtet, bei der Verbindung des ersten Flugzeuginnenausstattungsbauteils mit dem zweiten Flugzeuginnenausstattungsbauteil miteinander in Eingriff zu gelangen, um eine gasundurchlässige Verbindungsnaht zu bilden. Die Verbindungsnaht erstreckt sich vorzugsweise entlang einer Verbindungslinie zwischen dem ersten und den zweiten Innenausstattungsbauteil. Wenn das erste und das zweite Flugzeuginnenausstattungsbauteil beispielsweise rechteckig ausgebildet sind, erstreckt sich die Verbindungsnaht vorzugsweise über die gesamte Länge einer Seite des ersten Flugzeuginnenausstattungsbauteils und über die gesamte Länge einer an die Seite des ersten Flugzeuginnenausstattungsbauteils angrenzenden Seite des zweiten Flugzeuginnenausstattungsbauteils.

Das erfindungsgemäße Flugzeuginnenausstattungsbauteilsystem umfasst zwei Flugzeuginnenausstattungsbauteile, die mittels der an den Flugzeuginnenausstattungsbauteilen vorgesehenen Verbindungselemente auf rasche und einfache Art und Weise gasdicht miteinander verbunden werden können. Dadurch kann auf aufwändige Arbeitsschritte zur Abdichtung der Schnittstellen zwischen den Flugzeuginnenausstattungsbauteilen des Flugzeuginnenausstattungsbauteilsystems mit Klebeband oder dergleichen verzichtet und die Montage des Flugzeuginnenausstattungsbauteilsystems in einem Flugzeug insgesamt einfacher gestaltet werden.

In einer bevorzugten Ausführung des Flugzeuginnenausstattungsbauteilsystems ist an dem ersten Flugzeuginnenausstattungsbauteil mindestens ein weiteres Verbindungselement befestigt, das dazu eingerichtet ist, bei einer Verbindung des ersten Flugzeuginnenausstattungsbauteils mit einem weiteren Flugzeuginnenausstattungsbauteils und/oder einer Flugzeugstruktur mit einem komplementären Verbindungselement des weiteren Flugzeuginnenausstattungsbauteils und/oder der Flugzeugstruktur in Eingriff zu gelangen, um eine gasundurchlässige Verbindungsnaht zu bilden. Alternativ oder zusätzlich dazu kann an dem zweiten Flugzeuginnenausstattungsbauteil mindestens ein weiteres Verbindungselement befestigt werden, das dazu eingerichtet ist, bei einer Verbindung des zweiten Flugzeuginnenausstattungsbauteils mit einem weiteren Flugzeuginnenausstattungsbauteil und/oder einer Flugzeugstruktur mit einem komplementären Verbindungselement des weiteren Flugzeuginnenausstattungsbauteils und/oder der Flugzeugstruktur in Eingriff zu gelangen, um eine gasundurchlässige Verbindungsnaht zu bilden.

Mit einem derartigen Flugzeuginnenausstattungsbauteilsystem können Flugzeuginnenbereiche großflächig, lückenlos und gasundurchlässig mit einer aus den Flugzeuginnenausstattungsbauteilen bestehenden Verkleidung ausgekleidet werden. Ferner erlauben es die Verbindungselemente an den Flugzeuginnenausstattungsbauteilen und an der Flugzeugstruktur, bei einer Vormontage der Bauteile außerhalb des Flugzeugs oder einer Endmontage des Systems im Flugzeug die einzelnen Flugzeuginnenausstattungsbauteile einfach und ohne den Einsatz von separaten Abdichtungsmaterialien wie Kleber, Klebeband und/oder Dichtungsschaum untereinander und/oder mit der Flugzeugstruktur zu verbinden. Die Installation des Flugzeuginnenausstattungsbauteilsystems ist somit kostengünstig sowie wenig zeit- und personalintensiv.

Das Verbindungselement des ersten Flugzeuginnenausstattungsbauteils kann als Federlasche eines Druckverschlussbandes oder als Nutlasche eines Druckverschlussbandes ausgebildet sein. Ferner kann das Verbindungselement des zweiten Flugzeuginnenausstattungsbauteils als Federlasche eines Druckverschlussbandes oder als Nutlasche eines Druckverschlussbandes ausgebildet sein. Vorzugsweise ist das Verbindungselement des ersten Flugzeuginnenausstattungsbauteils als Federlasche und das Verbindungselement des zweiten Flugzeuginnenausstattungsbauteils als Nutlasche ausgeführt. Alternativ dazu kann das Verbindungselement des ersten Flugzeuginnenausstattungsbauteils als Nutlasche und das Verbindungselement des zweiten Flugzeuginnenausstattungsbauteils als Federlasche ausgeführt sein. Ferner ist eine Konfiguration denkbar, bei der die einzelnen Verbindungselemente abschnittsweise als Nutlasche und abschnittsweise als Federlasche ausgebildet sind. Wesentlich ist lediglich, dass die Verbindungselemente der beiden Flugzeuginnenausstattungsbauteil entlang ihrer Länge gasdicht miteinander verbindbar sind. Die Ausgestaltung der Verbindungselemente als Nut- und Federlaschen eines Druckverschlussbandes ermöglicht das Verbinden der Verbindungselemente mit bloßen Händen ohne den Einsatz von zusätzlichem Werkzeug.

Vorzugsweise erstreckt/erstrecken sich das Verbindungselement/die Verbindungselemente des ersten Flugzeuginnenausstattungsbauteils entlang zumindest eines Teilabschnitts eines Außenumfangs des ersten Flugzeuginnenausstattungsbauteils. Ferner kann/können sich das Verbindungselement/die Verbindungselemente des zweiten Flugzeuginnenausstattungsbauteils entlang zumindest eines Teilabschnitts eines Außenumfangs des zweiten Flugzeuginnenausstattungsbauteils erstrecken. Dadurch müssen beim Verbinden von zwei Flugzeuginnenausstattungsbauteilen die beiden Flugzeuginnenausstattungsbauteile wenn überhaupt nur teilflächig miteinander überlappen. Dies maximiert die resultierende Gesamtfläche des aus den zwei Flugzeuginnenausstattungsbauteilen zusammengesetzten Gesamtmoduls. Das Flugzeuginnenausstattungsbauteilssystem erlaubt somit ein platz- und kostensparendes Auskleiden von Flugzeuginnenbereichen.

Wenn ein Flugzeuginnenausstattungsbauteil des erfindungsgemäßen Flugzeuginnenausstattungsbauteilsystems zum Beispiel eine rechteckige oder quadratische Form hat, sind die Verbindungselemente vorzugsweise entlang einer oder mehrerer Seitenkante des Flugzeuginnenausstattungsbauteils angeordnet. Insbesondere kann eine Seitenkante des Flugzeuginnenausstattungsbauteils mit einem in Form einer Federlasche ausgebildeten Verbindungselement und die gegenüberliegende Seitenkante des Flugzeuginnenausstattungsbauteils mit einem in Form einer Nutlasche ausgebildeten Verbindungselement ausgestattet sein. Die Verbindungselemente können jeweils sowohl auf einer Vorderseite als auch auf einer Rückseite des Flugzeuginnenausstattungsbauteils angeordnet sein.

Vorzugsweise wird das erste Flugzeuginnenausstattungsbauteil von mindestens einer Bohrung durchsetzt, die in einem an den Außenumfang des ersten Flugzeuginnenausstattungsbauteils angrenzenden Randbereich des ersten Flugzeuginnenausstattungsbauteils angeordnet ist. Von der Bohrung kann sich ein bis zu dem Außenumfang des ersten Flugzeuginnenausstattungsbauteils reichender Schlitz erstrecken. Alternativ oder zusätzlich dazu kann auch das zweite Flugzeuginnenausstattungsbauteil von mindestens einer Bohrung durchsetzt werden, die in einem an den Außenumfang des zweiten Flugzeuginnenausstattungsbauteils angrenzenden Randbereichs des zweiten Flugzeuginnenausstattungsbauteils angeordnet ist. Wiederum kann sich von der Bohrung ein bis zum Außenumfang des zweiten Flugzeuginnenausstattungsbauteils reichender Schlitz erstrecken. Beispielsweise kann eine Vielzahl von Bohrungen entlang einer gedachten Linie parallel zu einer Seitenkante eines rechteckigen oder quadratischen Flugzeuginnenausstattungsbauteils angeordnet sein. Der Querschnitt der Bohrungen kann kreisförmig, ellipsenförmig, rechteckig oder anderweitig ausgebildet sein.

Eine bevorzugte Ausführung des Flugzeuginnenausstattungsbauteilsystems umfasst eine Kopplungsvorrichtung mit einem Kopplungsstift, einer Kopplungsöse, welche dazu eingerichtet ist, den Kopplungsstift aufzunehmen, und einer Dichtungsscheibe, in der eine von dem Kopplungsstift durchsetzbare Öffnung ausgebildet ist. Die Kopplungsöse kann den Kopplungsstift rastend aufnehmen, damit sich der Kopplungsstift nicht ungewollt aus der Kopplungsöse lösen kann. Wird der Kopplungsstift durch die Dichtungsscheibe hindurchgeschoben, schließen die Öffnung der Dichtungsscheibe und der Kopplungsstift miteinander gasundurchlässig ab. Die Kopplungsvorrichtung dient dazu, zwei Flugzeuginnenausstattungsbauteile miteinander zu verbinden. Hierzu wird der Kopplungsstift zunächst durch eine Bohrung in einem ersten Flugzeuginnenausstattungsbauteil, dann durch die Dichtungsscheibe und anschließend durch eine Bohrung in einem zweites Flugzeuginnenausstattungsbauteil hindurchgeführt, um schließlich von der Kopplungsöse fest aufgenommen zu werden.

Wenn in dem ersten und/oder dem zweiten Flugzeuginnenausstattungsbauteil ein sich von einer Bohrung bis zu einem Außenumfang des Flugzeuginnenausstattungsbauteils erstreckender Schlitz ausgebildet ist, kann eine Bewegung des Flugzeuginnenausstattungsbauteils dazu führen, dass sich das Flugzeuginnenausstattungsbauteil von dem Kopplungsstift löst. Eine derartige Bewegung des Flugzeuginnenausstattungsbauteils kann beispielsweise durch einen in einem Dekompressionsfall auf das Flugzeuginnenausstattungsbauteil wirkenden Differenzdruck ausgelöst werden. Auf die Bereitstellung zusätzlicher Dekompressionselemente kann dann verzichtet werden.

Vorzugsweise besteht/bestehen das Verbindungselement/die Verbindungselemente des ersten Flugzeuginnenausstattungsbauteils und/oder das Verbindungselement/die Verbindungselemente des zweiten Flugzeuginnenausstattungsbauteils zumindest teilweise aus einem gasundurchlässigen, aus einem schwer entflammbaren und/oder aus einem durchbrandfesten Material. Dadurch wird der Durchtritt von Gasen und/oder Flüssigkeiten oder ein Durchschlagen von Feuer durch die Verbindungselemente verlässlich verhindert.

Insbesondere kann/können das Verbindungselement/die Verbindungselemente des ersten Flugzeuginnenausstattungsbauteils und/oder das Verbindungselemente/die Verbindungselemente des zweiten Flugzeuginnenausstattungsbauteils zumindest teilweise aus einem thermoplastischen Material, ausgewählt aus einer Gruppe umfassend handelsüblichen Kunststoff, Polyphenolsulfide, Polyethersulfone und/oder Polyetherketone, besteht/bestehen. Durch die Verwendung solcher thermoplastischer Materialien kann/können das Verbindungselement/die Verbindungselemente elastisch verformbar, biegbar und/oder faltbar gestaltet werden. Dadurch wird die Installation der Flugzeuginnenausstattungsbauteile im Flugzeug weiter vereinfacht, da die Flexibilität des Verbindungselements/der Verbindungselemente ein einfaches Verbinden der Verbindungselemente von zwei benachbarten Flugzeuginnenausstattungsbauteilen ermöglicht.

In einer bevorzugten Ausführung des Flugzeuginnenausstattungsbauteilsystems ist/sind das Verbindungselement/die Verbindungselemente des ersten Flugzeuginnenausstattungsbauteil durch thermoplastisches Verschweißen an dem ersten Flugzeuginnenausstattungsbauteil angebracht. Ferner kann/können das Verbindungselement/die Verbindungselemente des zweiten Flugzeuginnenausstattungsbauteil durch thermoplastisches Verschweißen an dem zweiten Flugzeuginnenausstattungsbauteil angebracht sein. Das Verschweißen kann durch Heiß-, Druck- und/oder Ultraschallkonsolidieren bewirkt werden. Alternativ dazu kann/können das Verbindungselement/die Verbindungselemente aber auch durch Verkleben an dem Flugzeuginnenausstattungsbauteil angebracht sein.

In einer bevorzugten Ausführung des Flugzeuginnenausstattungsbauteilsystems ist/sind das Verbindungselement/die Verbindungselemente des ersten Flugzeuginnenausstattungsbauteils und/oder das Verbindungselement/die Verbindungselemente des zweiten Flugzeuginnenausstattungsbauteils mit einem intumeszenten Lack beschichtet. Der intumeszente Lack ist dazu eingerichtet, unter Hitzeeinwirkung aufzuquellen, und somit eine durchbrandfeste Naht zwischen zwei miteinander verbundenen Verbindungselementen zu bewirken. Dadurch bleiben die Flugzeuginnenausstattungsbauteile des Flugzeuginnenausstattungsbauteilsystems auch unter Hitzeinwirkung sowohl gasundurchlässig als auch durchbrandfest verbunden.

Mindestens ein Flugzeuginnenausstattungsbauteil des erfindungsgemäßen Flugzeuginnenausstattungsbauteilsystems ist wie oben beschrieben gestaltet und weist einen Rahmen mit zwei starren Rahmenabschnitten und einem die zwei starren Rahmenabschnitte miteinander verbindenden Gelenk sowie einen von dem Rahmen getragenen Flächenabschnitt auf, welcher durch eine mit dem Rahmen verbundene biegsame und/oder faltbare Membran gebildet wird. Sämtlich oben im Zusammenhang mit einem derartigen Flugzeuginnenausstattungsbauteil beschriebenen Merkmale sind daher auf das erfindungsgemäße Flugzeuginnenausstattungsbauteilsystem übertragbar.

Bevorzugt findet/finden das erfindungsgemäße Flugzeuginnenausstattungsbauteil und/oder das erfindungsgemäße Flugzeuginnenausstattungsbauteilsystem Verwendung in einem Frachtraumbereich eines Verkehrsflugzeugs. Dort kann/können das Flugzeuginnenausstattungsbauteil und/oder das Flugzeuginnenausstattungsbauteilsystem beispielsweise als Bodenverkleidung, Deckenverkleidung oder Seitenwandverkleidung zum Einsatz kommen.

Eine bevorzugte Ausführungsform der Erfindung wird nun anhand der beigefügten schematischen Figuren näher erläutert. Es zeigen:
- Figur 1: eine Frontansicht eines Flugzeuginnenausstattungsbauteils, welches entlang von Faltungslinien gefaltet werden kann,
- Figuren 2a bis 2g: verschiedene dreidimensionale Darstellungen eines Flugzeuginnenausstattungsbauteils, welches eine Mehrzahl von Faltungslinien und eine Mehrzahl von Versteifungsstrukturen umfasst und entlang der Faltungslinien schrittweise gefaltet wird,
- Figur 3: eine Rückansicht eines Flugzeuginnenausstattungsbauteils, das eine Mehrzahl von Verbindungselementen umfasst,
- Figur 4: eine Querschnittsdarstellung des Flugzeuginnenausstattungsbauteils gemäß Figur 3,
- Figur 5: eine Frontansicht des Flugzeuginnenausstattungsbauteils gemäß Figur 3,
- Figur 6: eine Querschnittsdarstellung, die das Verbinden von zwei Flugzeuginnenausstattungsbauteilen zu einem Flugzeuginnenausstattungsbauteilsystem veranschaulicht,
- Figur 7: eine Querschnittsdarstellung von drei miteinander verbundenen Flugzeuginnenausstattungsbauteilen eines Flugzeuginnenausstattungsbauteilsystems,
- Figur 8: eine Frontansicht zweier miteinander verbundener Flugzeuginnenausstattungsbauteile eines Flugzeuginnenausstattungsbauteilsystems,
- Figur 9: eine Querschnittsdarstellung der Flugzeuginnenausstattungsbauteile des Flugzeuginnenausstattungsbauteilsystems gemäß Figur 7 in einem an einer Flugzeugstruktur befestigten Zustand,
- Figur 10: eine Frontansicht eines weiteren Flugzeuginnenausstattungsbauteils.

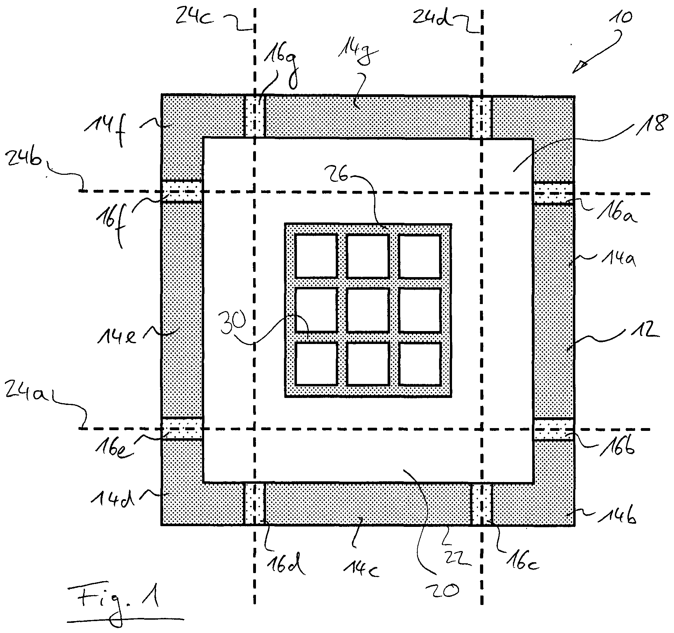

Ein in der Figur 1 dargestelltes Flugzeuginnenausstattungsbauteil 10 umfasst einen Rahmen 12. Der Rahmen 12 umfasst acht starre Rahmenabschnitte 14a-h sowie acht die starren Rahmenabschnitte miteinander verbindende Gelenke 16a-h. Ferner umfasst das Flugzeuginnenausstattungsbauteil 10 einen von dem Rahmen getragenen Flächenabschnitt 18, welcher durch eine mit dem Rahmen 12 verbundene biegsame und/oder faltbare Membran 20 gebildet wird.

Die Membran 20 besteht aus einem S2-Glas- oder Basaltfasergewebe, welches mit einem thermoplastischen Material, wie z.B. Polyphenolsulfid, Polyethersulfon und/oder Polyetherketon, imprägniert ist. Die Membran 20 ist somit als mehrschichtiges Laminat ausgebildet und hat die Eigenschaft, dass sie problemlos biegbar und/oder faltbar ist. Die Membran 20 weist eine zweidimensionale, quadratische, homogene und ebene Membranfläche auf. Das Flugzeuginnenausstattungsbauteil 10 wird durch einen Außenumfang 22 begrenzt, wobei sich die Membranfläche bis zu dem Außenumfang 22 des Flugzeuginnenausstattungsbauteils 10 erstreckt.

Der Rahmen 12 besteht aus einem Glas-, Basalt-, Aramit- oder Kohlenstofffaser verstärktem Material. Insbesondere umfasst der Rahmen 12 unidirektionale, bandstreifenförmige Tapes, in welchen die einzelnen Fasern im Wesentlichen parallel zu den Tapeseitenkanten angeordnet sind. Ferner enthält der Rahmen 12 ein thermoplastisches Material, wie z.B. Polyphenolsulfid, Polyethersulfon und/oder Polyetherketon. Die starren Rahmenabschnitte 14a-h des Rahmens 12 sind unbiegsam und/oder unfaltbar gestaltet. Die Gelenke 16a-h hingegen sind durch Abschnitte des Rahmens 12 gebildet, welche biegsam und/oder faltbar sind.

Der Rahmen 12 erstreckt sich im Wesentlichen durchgehend entlang des Außenumfangs 22 des Flugzeuginnenausstattungsbauteils 10 und somit entlang des Außenumfangs der Membran 20. Der Rahmen 12 ist mit der Membran 20 durch thermoplastisches Verschweißen verbunden. Der Rahmen 12 stellt eine Art Randverstärkung der Membran 20 dar. Entlang des Rahmens 12 wechseln sich unbiegsame und/oder unfaltbare starre Rahmenabschnitte 14a-h mit den Gelenken 16a-h ab. Dabei sind die Gelenke 16a-h auf vier gedachten Faltungslinien 24a-d angeordnet. Die Faltungslinien 24a-d gestatten es, den Rahmen 12 und die Membran 20 und somit das Flugzeuginnenausstattungsbauteil 10 an sich um die Faltungslinien 24a-d zu biegen und/oder zu falten.

Des Weiteren ist der Figur 1 zu entnehmen, dass das Flugzeuginnenausstattungsbauteil 10 eine Versteifungsstruktur 26 umfasst. Die Versteifungsstruktur 26 ist mit der Membran 20 verbunden und erstreckt sich über eine Teilfläche des von dem Rahmen 12 getragenen Flächenabschnitts 18. Die Versteifungsstruktur 26 besteht, ähnlich wie der Rahmen 12, aus einem Glas-, Basalt-, Aramit- oder Kohlenstofffaser verstärkten Material und/oder aus thermoplastischem Material, wie z.B. Polyphenolsulfid, Polyethersulfon und/oder Polyetherketon. Die Versteifungsstruktur 26 ist mit der Membran 20 durch thermoplastisches Verschweißen verbunden. Die Anordnung der Versteifungsstruktur 26 auf der Membran 20 erfolgt derart, dass die Biege- und/oder Faltbarkeit des Flugzeuginnenausstattungsbauteils 10 um die Faltungslinien 24a-d nicht beeinträchtigt wird. Dies wird dadurch erreicht, dass die Versteifungsstruktur 26 nur auf Teilflächen der Membran 20 aufgebracht wird, die von den Faltungslinien 24a-d nicht geschnitten werden.

Die Versteifungsstruktur 26 ist in Form eines Gitters ausgebildet. Sie umfasst zur Steifheit des Flugzeuginnenausstattungsbauteil 10 beitragende Gitterstreben 30, welche schachbrettförmig angeordnet sind. Dabei sind die Gitterstreben 30 ähnlich wie der Rahmen 12 aus unidirektionalen Tapes gebildet. Die Versteifungsstruktur 26 ist konzentrisch mit der Membran 20 ausgerichtet. Die Gitterstreben 30 der Versteifungsstruktur 26 sind parallel bzw. senkrecht zu den Kanten des Außenumfangs 22 des Flugzeuginnenausstattungsbauteils 10 orientiert.

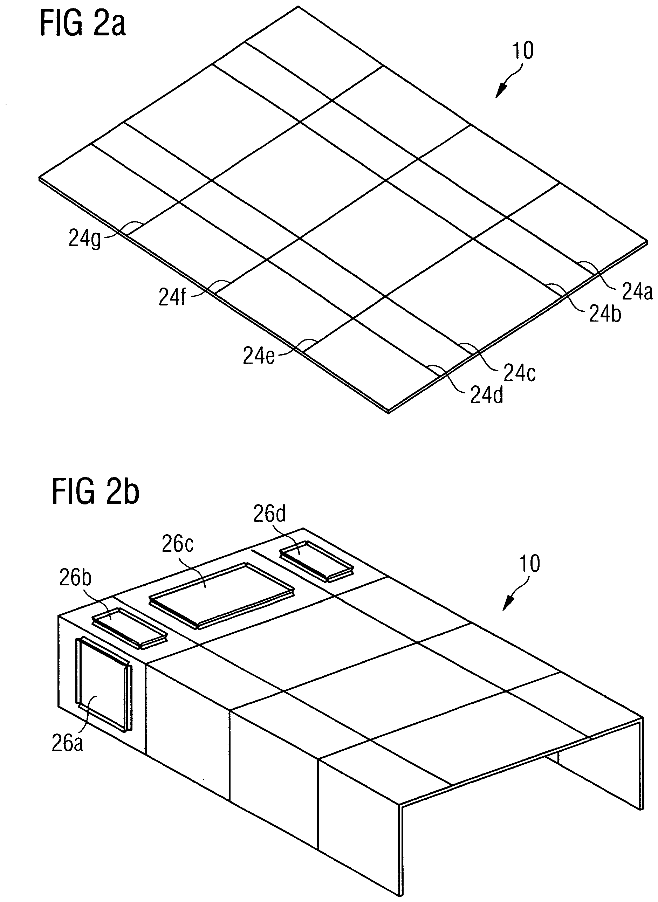

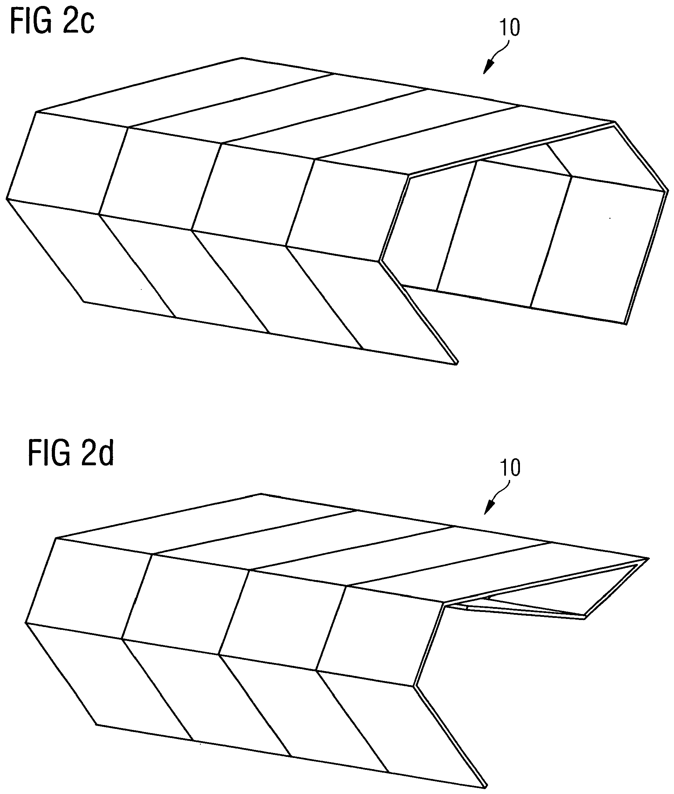

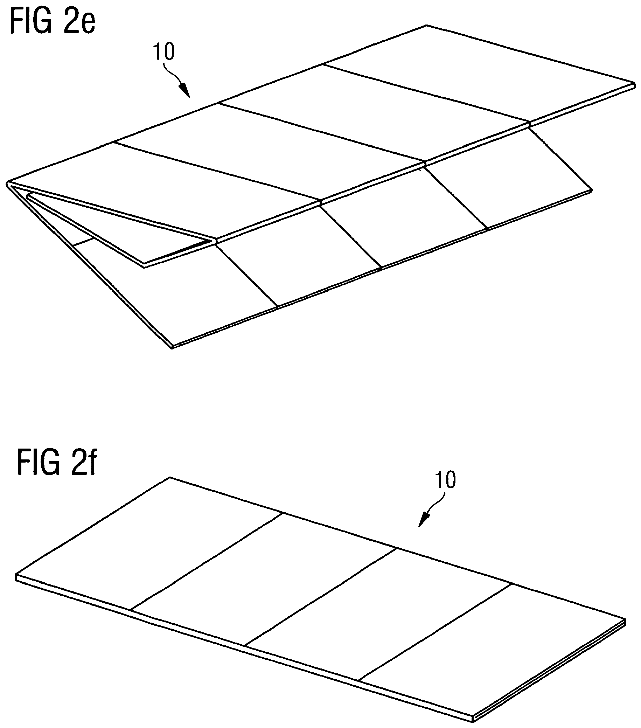

Wie in den Figuren 2a bis 2g dargestellt, lässt sich ein wie oben beschrieben gestaltetes Flugzeuginnenausstattungsbauteil 10, das sich von dem in Figur 1 veranschaulichten Bauteil im Wesentlichen lediglich durch seine Geometrie unterscheidet, innerhalb weniger Schritte entlang der Faltungslinien 24a-g zusammenfalten. Dadurch wird die ursprüngliche räumliche Ausdehnung des Flugzeuginnenausstattungsbauteils 10 deutlich reduziert. Aus Figur 2b wird deutlich, dass das in den Figuren 2a bis 2g dargestellte Flugzeuginnenausstattungsbauteil 10 eine Mehrzahl von Versteifungsstrukturen 26a-d umfasst. Der besseren Übersichtlichkeit halber wurde in den Figuren 2a und 2c bis g auf die Veranschaulichung der Versteifungsstrukturen 26a-d verzichtet.

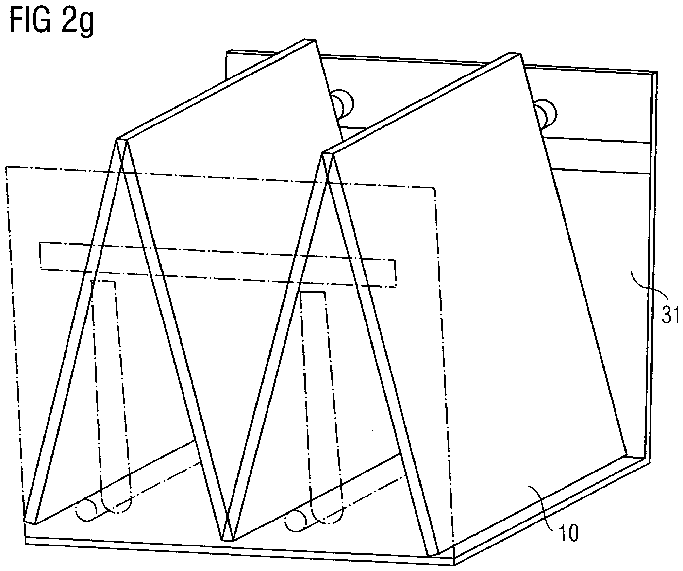

Das Flugzeuginnenausstattungsbauteils 10 weist in dem in Figur 2a dargestellten Faltungszustand gegenüber in dem in Figur 2f dargestellten Faltungszustand eine vierfach größere Flächenausdehnung auf. Ausgehend von dem in Figur 2f gezeigten Faltungszustand kann das Flugzeuginnenausstattungsbauteil 10 für den Transport weiter gefaltet werden. In Figur 2g ist dargestellt, wie das Flugzeuginnenausstattungsbauteil 10 zusammengefaltet in einer Transportvorrichtung 31 verstaut ist. Das Flugzeuginnenausstattungsbauteil 10 kann somit platzsparend zu einem Ort transportiert werden, an welchem das Flugzeuginnenausstattungsbauteil 10 in einem Flugzeug montiert wird. Insbesondere sind die räumlichen Abmessungen des für den Transport zusammengefalteten Flugzeuginnenausstattungsbauteils 10 derart klein, dass das zusammengefaltete Flugzeuginnenausstattungsbauteil 10 bei der Montage problemlos durch eine in einem Flugzeugrumpf vorhandene Tür, wie z.B. eine Frachtraumtür, hindurchbewegt werden kann. Im Inneren des Flugzeugrumpfes wird das Flugzeuginnenausstattungsbauteil 10 dann wieder in seinen in Figur 2a dargestellten ursprünglichen Zustand entfaltet und mit dem Flugzeug verbunden.

Die Verwendung von thermoplastischen Materialien für die einzelnen Komponenten des Flugzeuginnenausstattungsbauteils 10 ermöglicht es, das Flugzeuginnenausstattungsbauteil 10 sowohl gasundurchlässig, als auch durchbrandfest, d.h. schwer entflammbar zu gestalten. Somit eignet sich das Flugzeuginnenausstattungsbauteil 10 insbesondere dazu, einen gas- und/oder feuerisolierend wirkenden Flugzeuginnenbereich flächig auszukleiden.

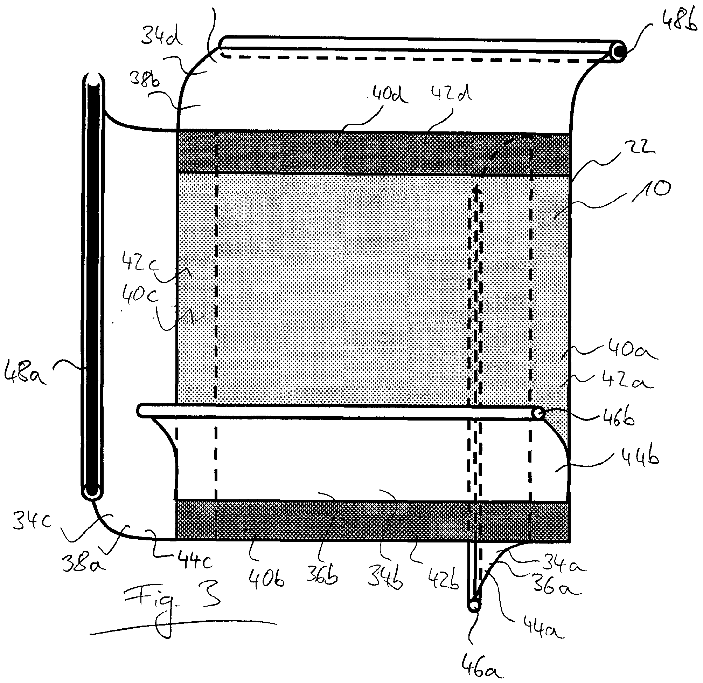

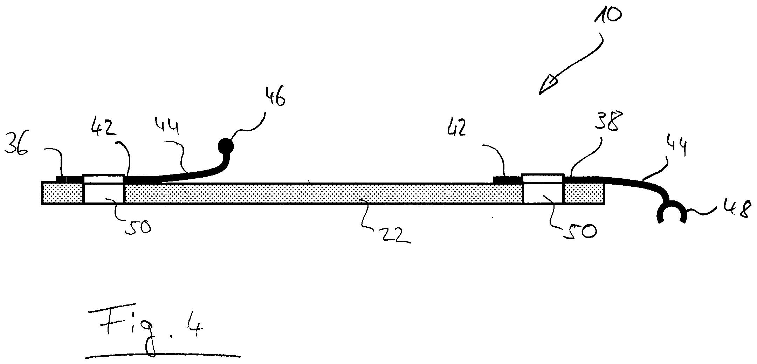

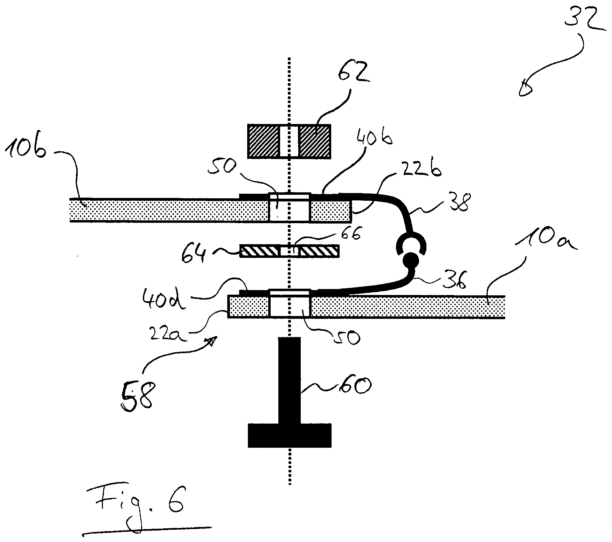

Ein in den Figuren 3 bis 5 gezeigtes Flugzeuginnenausstattungsbauteil 10 kann mit entsprechend gestalteten Flugzeuginnenausstattungsbauteilen 10 zu einem Flugzeuginnenausstattungsbauteilsystem 32 verbunden werden (siehe Figur 6). Hierzu umfasst das Flugzeuginnenausstattungsbauteil 10 vier Verbindungselemente 34a-d, wovon zwei als männliche Verbindungselemente 34a-b und zwei als weibliche Verbindungselemente 34c-d ausgebildet sind. Männliche Verbindungselemente 34a-b und weibliche Verbindungselemente 34c-d sind zueinander komplementär. Gelangt ein männliches Verbindungselement 34a-b mit einem weiblichen Verbindungselement 34c-d in Eingriff, rasten die Verbindungselemente 34a-d ineinander ein und bilden eine gasundurchlässige Verbindungsnaht. Das männliche Verbindungselement 34a-b ist als Federlasche 36a-b eines Druckverschlussbandes und das weibliche Verbindungselement 34c-d ist als Nutlasche 38a-b des Druckverschlussbandes ausgebildet.

Figur 3 zeigt, wie die zwei Federlaschen 36a-b und die zwei Nutlaschen 38a-b an dem Flugzeuginnenausstattungsbauteil 10 angeordnet sind. Eine erste Federlasche 36a erstreckt sich entlang eines Teilabschnitts 40a des Außenumfangs 22 des Flugzeuginnenausstattungsbauteils 10 und ist auf einer Rückseite des Flugzeuginnenausstattungsbauteils 10 mit dem Flugzeuginnenausstattungsbauteil 10 verbunden. Eine zweite Federlasche 36b erstreckt sich entlang eines Teilabschnitts 40b des Außenumfangs 22 und ist auf einer Vorderseite mit dem Flugzeuginnenausstattungsbauteil 10 verbunden. Eine erste Nutlasche 38a erstreckt sich entlang eines Teilabschnitts 40c des Außenumfangs 22 und ist auf der Rückseite mit dem Flugzeuginnenausstattungsbauteil 10 verbunden. Eine zweite Nutlasche 38b erstreckt sich entlang eines Teilabschnitts 40d des Außenumfangs 22 und ist auf der Vorderseite mit dem Flugzeuginnenausstattungsbauteil 10 verbunden.

Die Federlaschen 36a-b und Nutlaschen 38a-b sind bandförmig ausgebildet und jeweils nur über eine Teilfläche 42a-d der Feder- und Nutlaschen 36a-b, 38a-b mit dem Flugzeuginnenausstattungsbauteil 10 verbunden. Die verbleibende unverbundenen Teilflächen 44a-d der Feder- und Nutlaschen 36a-b, 38a-b erlauben es, die Federn 46a-b der Federlaschen 36a-b und die Nuten 48a-b der Nutlaschen 38a-b im Wesentlichen beweglich zu lagern. Dies vereinfacht das Verbinden von Federlasche 36 und Nutlasche 38 bei der Montage des Flugzeuginnenausstattungssystems 32.

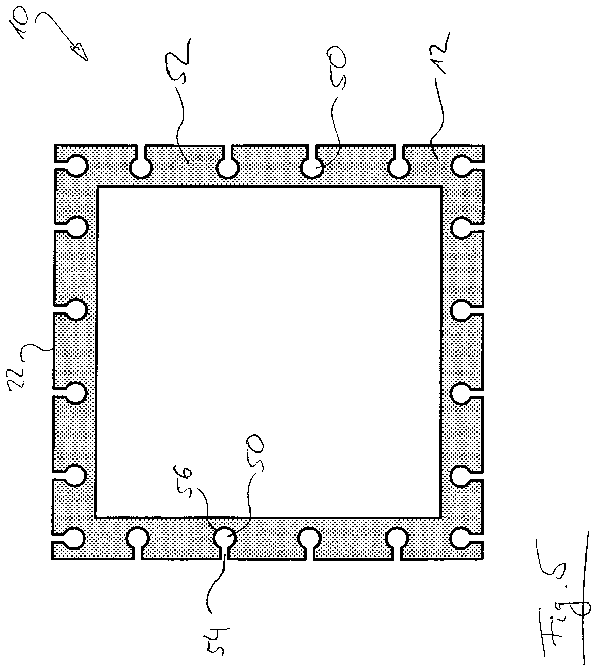

Das Flugzeuginnenausstattungsbauteil 10 umfasst ferner eine Vielzahl von Bohrungen 50, siehe Figur 5. Die in Figur 5 veranschaulichten Bohrungen sind in der Darstellung gemäß Figur 3 der besseren Übersichtlichkeit halber nicht gezeigt. In der Darstellung gemäß Figur 5 wurde dagegen auf die Veranschaulichung der Verbindungselemente 34c-d verzichtet. Die Bohrungen 50 durchsetzen das Flugzeuginnenausstattungsbauteil 10 und sind in einem an den Außenumfang 22 des Flugzeuginnenausstattungsbauteil 10 angrenzenden Randbereich 52 des Flugzeuginnenausstattungsbauteils 10 angeordnet. Ferner sind Schlitze 54 vorgesehen, welche sich von jeder Bohrung 50 bis zum Außenumfang 22 des Flugzeuginnenausstattungsbauteils 10 erstrecken. Die Bohrung 50 weist einen kreisförmigen Querschnitt 56 auf. Die Breite des Schlitzes 54 ist kleiner als der Durchmesser der kreisförmigen Querschnitts 56.

Das mindestens zwei Flugzeuginnenausstattungsbauteile 10 gemäß den Figuren 3 und 5 umfassende Flugzeuginnenausstattungsbauteilsystem 32 umfasst ferner eine dargestellte Kopplungsvorrichtung 58 (siehe Figur 6), welche dazu eingerichtet ist, ein erstes Flugzeuginnenausstattungsbauteil 10a mit einem zweiten Flugzeuginnenausstattungsbauteil 10b des Flugzeuginnenausstattungsbauteilsystems 32 zu verbinden. Die Kopplungsvorrichtung 58 umfasst einen Kopplungsstift 60 und eine Kopplungsöse 62, welche dazu eingerichtet ist, den Kopplungsstift 60 rastend aufzunehmen. Kopplungsstift 60 und Kopplungsöse 62 sind als eine Normsteckverbindung des Typs ABS 1010 und/oder ABS 1011 ausgebildet. Die Kopplungsvorrichtung 58 umfasst ferner eine Dichtungsscheibe 64, welche aus einem geschlossenporigen Silikonschaum gefertigt ist und in der eine von dem Kopplungsstift 60 durchsetzbare Öffnung 66 ausgebildet ist. Die Öffnung 66 der Dichtungsscheibe 64 ist so gestaltet, dass der Kopplungsstift 60 beim Hindurchgreifen durch die Dichtungsscheibe 64 gasundurchlässig aufgenommen wird.

Beim Verbinden des ersten Flugzeuginnenausstattungsbauteils 10a mit dem zweiten Flugzeuginnenausstattungsbauteil 10b wird der Kopplungsstift 60 zunächst durch einen eine Federlasche 36 aufweisenden Teilabschnitt 40d des Außenumfangs 22a des ersten Flugzeuginnenausstattungsbauteils 10a durch eine der Bohrungen 50 hindurch gesteckt. Anschließend greift der Kopplungsstift 60 durch die flächig und gasundurchlässig auf dem ersten Flugzeuginnenausstattungsbauteil 10a aufliegende Dichtungsscheibe 64 hindurch. Danach greift der Kopplungsstift 60 durch eine der Bohrungen 50 in einem eine Nutlasche 38 aufweisenden Teilabschnitt 40b des Außenumfangs 22b des zweiten Flugzeuginnenausstattungsbauteils 10b hindurch. Dabei liegt das zweite Flugzeuginnenausstattungsbauteil 10b an der Dichtungsscheibe 64 auf. Schließlich rastet der Kopplungsstift 60 in die an dem zweiten Flugzeuginnenausstattungsbauteil 10b anliegende Kopplungsöse 62 ein. Die Federlasche 36 des ersten Flugzeuginnenausstattungsbauteils 10a und die Nutlasche 38 des zweiten Flugzeuginnenausstattungsbauteils 10b werden miteinander verbunden und bilden somit eine gasundurchlässige Verbindungsnaht.

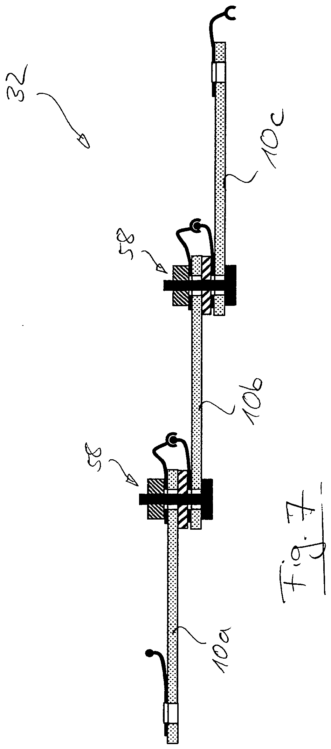

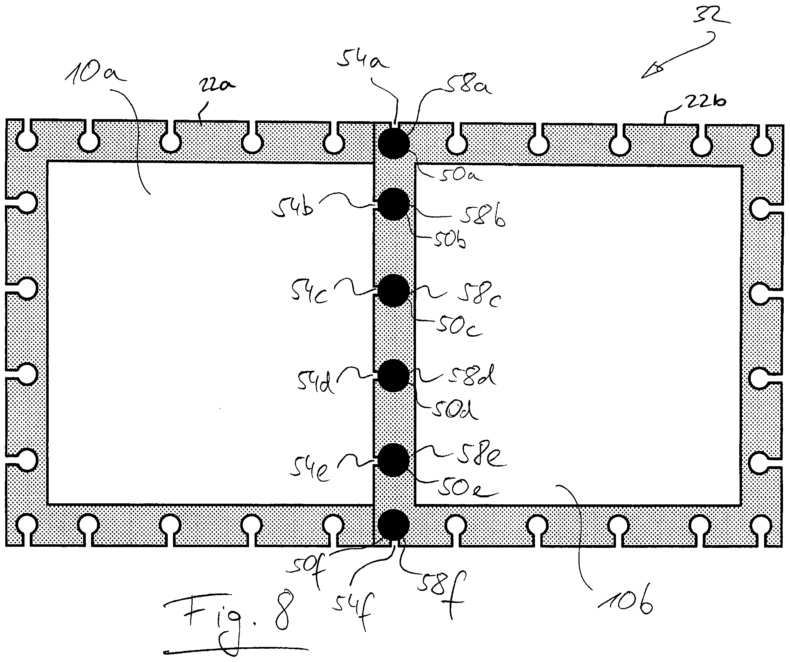

Die Kopplungsvorrichtung 58 ermöglicht das problemlose Verbinden von einer Vielzahl von Flugzeuginnenausstattungsbauteilen 10a-c des Flugzeuginnenausstattungsbauteilsystems 32, siehe Figuren 7 und 8. Wie in Figur 8 dargestellt, können zwei Flugzeuginnenausstattungsbauteile 10a-b mit Hilfe mehrerer Kopplungsvorrichtungen 58a-f des Flugzeuginnenausstattungsbauteilsystems 32 gasundurchlässig miteinander verbunden werden. In Figur 8 wurde, ebenso wie in Figur 5, auf die Veranschaulichung der Verbindungselemente 34c-d verzichtet.

Aus Figur 8 wird ein weiterer Vorteil des Flugzeuginnenausstattungsbauteilsystems 32 deutlich. Da in den Flugzeuginnenausstattungsbauteilen 10a-c sich von den Bohrungen 50a-f bis zum Außenumfang 22a-b der Flugzeuginnenausstattungsbauteile 10a-b erstreckende Schlitze 54a-f ausgebildet sind, kann eine Bewegung eines Flugzeuginnenausstattungsbauteile 10a-b dazu führen, dass sich das Flugzeuginnenausstattungsbauteil 10a-b von dem Kopplungsstift löst. Eine derartige Bewegung des Flugzeuginnenausstattungsbauteils 10a-b kann beispielsweise durch einen in einem Dekompressionsfall auf das Flugzeuginnenausstattungsbauteil wirkenden Differenzdruck ausgelöst werden. Auf die Bereitstellung zusätzlicher Dekompressionselemente kann dann verzichtet werden.

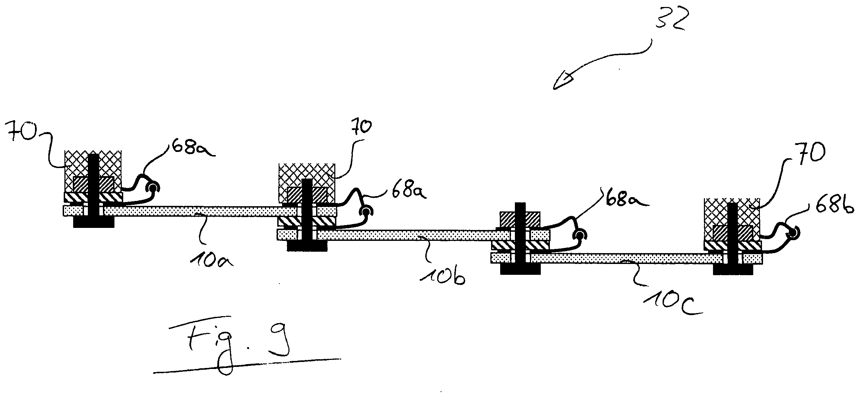

Das Flugzeuginnenausstattungsbauteilsystem 32 umfasst ferner weitere Verbindungselemente 68a-b aus, welche an einer Flugzeugstruktur 70 des das Flugzeuginnenausstattungsbauteilsystems 32 aufnehmenden Flugzeugs befestigt sind. Figur 9 zeigt drei miteinander verbundene Flugzeuginnenausstattungsbauteile 10a-c, welche an der Flugzeugstruktur 70 montiert sind. Die an der Flugzeugstruktur 70 gasundurchlässig befestigten Verbindungselemente 68a-b sind als Federlaschen und/oder Nutlaschen ausgebildet und gewährleisten eine gasundurchlässige Verbindung zwischen den Flugzeuginnenausstattungsbauteilen 10a-c mit der Flugzeugstruktur 70.

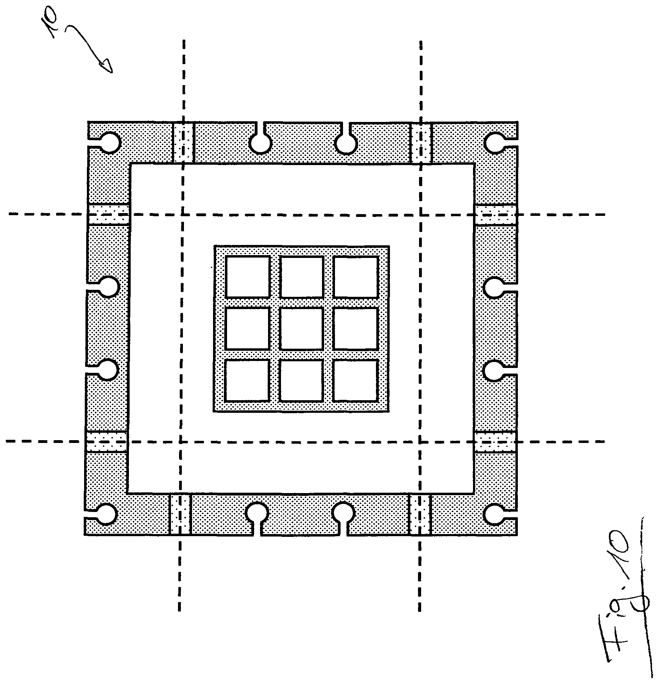

Figur 10 zeigt ein Flugzeuginnenausstattungsbauteil 10, welches sämtliche hier beschriebenen optionalen Merkmale des Flugzeuginnenausstattungsbauteils 10 aufweist und zum Einsatz in einem Flugzeuginnenausstattungsbauteilsystem 32 geeignet ist.

## Patentansprüche

1. Hugzeuginnenausstattungsbauteii (10) mit:
- einem Rahmen (12) und
- einem von dem Rahmen (12) getragenen Flächenabschnitt (18), welcher durch eine mit dem Rahmen (12) verbundene biegsame und/oder faltbare Membran (20) gebildet wird, **dadurch gekennzeichnet, dass** sich der Rahmen (12) durchgehend entlang eines Außenumfangs der Membran (20) erstreckt,
und dass der Rahmen (12) zwei starre Rahmenabschnitte (14a-h) sowie ein die starren Rahmenabschnitte (14a-h) miteinander verbindendes Gelenk (16a-h) umfasst.

2. Flugzeuginnenausstattungsbauteil nach Anspruch 1, **dadurch gekennzeichnet, dass** das Flugzeuginnenausstattungsbauteil (10) eine Mehrzahl von zwei Rahmenabschnitte (14a-h) miteinander verbindenden Gelenken (16a-h) umfasst, die auf einer gedachten Faltungslinie (24a-d) angeordnet sind, um welche sich das Flugzeuginnenausstattungsbauteil (10) biegen und/oder falten lässt, und/oder **dadurch gekennzeichnet, dass** das Gelenk/die Gelenke (16a-h) durch Aussparungen in dem Rahmen (12), durch unverstärkte, biegsame und/oder faltbare Abschnitte des Rahmens (12) und/oder durch einstückig mit dem von dem Rahmen (12) getragenen Flächenabschnitt (18) ausgebildete Bereiche der Membran (20) gebildet ist/ sind.

3. Flugzeuginnenausstattungsbauteil nach Anspruch 1 oder 2, **dadurch gekennzeichnet, dass** sich der Rahmen (12) im Wesentlichen durchgehend entlang des Außenumfangs (22) des Flugzeuginnenausstattungsbauteils (10) erstreckt.

4. Flugzeuginnenausstattungsbauteil nach einem der Ansprüche 1 bis 3, **gekennzeichnet durch** eine unbiegsame und/oder unfaltbare Versteifungsstruktur (26), welche mit der Membran (20) verbunden ist und sich über eine Teilfläche des von dem Rahmen (12) getragenen Flächenabschnitts (18) erstreckt.

5. Flugzeuginnenausstattungsbauteil nach einem der Ansprüche 1 bis 4, **dadurch gekennzeichnet, dass** der Rahmen (12), das Gelenk/die Gelenke (16a-h), die Membran (20) und/oder die Versteifungsstruktur (26) zumindest teilweise aus einem gasundurchlässigen und/oder aus einem durchbrandfesten Material besteht/bestehen, und/oder **dadurch gekennzeichnet, dass** der Rahmen (12), das Gelenk/die Gelenke (16a-h), die Membran (20) und/oder die Versteifungsstruktur (26) zumindest teilweise aus einem thermoplastischen Material, ausgewählt aus einer Gruppe umfassend Polyphenylsulfide, Polyethersulfone und/oder Polyetherketone, besteht/bestehen, und/oder **dadurch gekennzeichnet, dass** der Rahmen (12), das Gelenk/die Gelenke (16a-h), die Membran (20) und/oder die Versteifungsstruktur (26) zumindest teilweise aus einem mit Glas-, Basalt-, Aramid- und/oder Kohlenstofffasern verstärkten Material besteht/bestehen, und/oder **dadurch gekennzeichnet, dass** der Rahmen (12) und/oder die Versteifungsstruktur (26) mit der Membran (20) durch thermoplastisches Verschweißen punkt-, linien- oder flächenförmig verbunden ist/sind, und/oder **dadurch gekennzeichnet, dass** die Versteifungsstruktur (26) in Form eines Gitters ausgebildet ist.

6. Flugzeuginnenausstattungsbauteilsystem (32) mit:
- einem ersten Flugzeuginnenausstattungsbauteil (10a), an dem ein Verbindungselement (34a-b) befestigt ist, und
- einem zweiten Flugzeuginnenausstattungsbauteil (10b), an dem ein zu dem Verbindungselement (34a-d) des ersten Flugzeuginnenausstattungsbauteils (10a) komplementäres Verbindungselement (34a-d) befestigt ist, wobei das Verbindungselement (34a-d) des ersten Flugzeuginnenausstattungsbauteils (10a) und das Verbindungselement (34a-d) des zweiten Flugzeuginnenausstattungsbauteils (10b) dazu eingerichtet sind, bei einer Verbindung des ersten Flugzeuginnenausstattungsbauteils (10a) mit dem zweiten Flugzeuginnenausstattungsbauteil (10b) miteinander in Eingriff zu gelangen, um eine gasundurchlässige Verbindungsnaht zu bilden, und wobei das erste Flugzeuginnenausstattungsbauteil (10a) und/oder das zweite Flugzeuginnenausstattungsbauteil (10b) ein Flugzeuginnenausstattungsbauteil (10) nach einem der Ansprüche 1 bis 5 ist/sind.

7. Flugzeuginnenausstattungsbauteilsystem nach Anspruch 6,
**dadurch gekennzeichnet, dass** an dem ersten Flugzeuginnenausstattungsbauteil (10a) mindestens ein weiteres Verbindungselement (34a-d) befestigt ist, das dazu eingerichtet ist, bei einer Verbindung des ersten Flugzeuginnenausstattungsbauteils (10a) mit einem weiteren Flugzeuginnenausstattungsbauteil und/oder einer Flugzeugstruktur (68) mit einem komplementären Verbindungselement (34a-d) des weiteren Flugzeuginnenausstattungsbauteils und/oder der Flugzeugstruktur (68) in Eingriff zu gelangen, um eine gasundurchlässige Verbindungsnaht zu bilden, und/oder dass an dem zweiten Flugzeuginnenausstattungsbauteil (10b) mindestens ein weiteres Verbindungselement (34a-d) befestigt ist, das dazu eingerichtet ist, bei einer Verbindung des zweiten Flugzeuginnenausstattungsbauteils (10b) mit einem weiteren Flugzeuginnenausstattungsbauteil (10c) und/oder einer Flugzeugstruktur (68) mit einem komplementären Verbindungselement (34a-d) des weiteren Flugzeuginnenausstattungsbauteils (10c) und/oder der Flugzeugstruktur (68) in Eingriff zu gelangen, um eine gasundurchlässige Verbindungsnaht zu bilden.

8. Flugzeuginnenausstattungsbauteilsystem nach Anspruch 6 oder 7,
**dadurch gekennzeichnet, dass** das Verbindungselement/die Verbindungselemente (34a-d) des ersten Flugzeuginnenausstattungsbauteils (10b) und/oder des zweiten Flugzeuginnenausstattungsbauteils (10b) als Federlasche (36) eines Druckverschlussbandes und/oder als Nutlasche (38) eines Druckverschlussbandes ausgebildet ist/sind, und/oder **dadurch gekennzeichnet, dass** sich das Verbindungselement/die Verbindungselemente (34a-d) des ersten Flugzeuginnenausstattungsbauteils (10a) entlang zumindest eines Teilabschnitts (40a-d) eines Außenumfangs (22) des ersten Flugzeuginnenausstattungsbauteils (10a) erstreckt/erstrecken und/oder dass sich das Verbindungselement/die Verbindungselemente (34a-d) des zweiten Flugzeuginnenausstattungsbauteils (10b) entlang zumindest eines Teilabschnitts (40a-d) eines Außenumfangs (22) des zweiten Flugzeuginnenausstattungsbauteils (10b) erstreckt/erstrecken.

9. Flugzeuginnenausstattungsbauteilsystem nach einem der Ansprüche 6 bis 8, **dadurch gekennzeichnet, dass** das erste Flugzeuginnenausstattungsbauteil (10a) von mindestens einer Bohrung (50) durchsetzt wird, die in einem an den Außenumfang (22) des ersten Flugzeuginnenausstattungsbauteils (10a) angrenzenden Randbereich (52) des ersten Flugzeuginnenausstattungsbauteils angeordnet ist, wobei sich von der Bohrung (50) ein bis zum Außenumfang (22) des ersten Flugzeuginnenausstattungsbauteils (10a) reichender Schlitz (54) erstreckt, und/oder dass das zweite Flugzeuginnenausstattungsbauteil (10b) von mindestens einer Bohrung (50) durchsetzt wird, die in einem an den Außenumfang (22) des zweiten Flugzeuginnenausstattungsbauteils (10b) angrenzenden Randbereich des zweiten Flugzeuginnenausstattungsbauteils (10b) angeordnet ist, wobei sich von der Bohrung (50) ein bis zum Außenumfang (22) des zweiten Flugzeuginnenausstattungsbauteils (10b) reichender Schlitz (54) erstreckt.

10. Flugzeuginnenausstattungsbauteilsystem nach einem der Ansprüche 6 bis 9, **gekennzeichnet durch** eine Kopplungsvorrichtung (58) mit:
- einem Kopplungsstift (60),
- einer Kopplungsöse (62), welche dazu eingerichtet ist, den Kopplungsstift (60) aufzunehmen, und
- einer Dichtungsscheibe (64), in der eine von dem Kopplungsstift (60) durchsetzbare Öffnung (66) ausgebildet ist.

11. Flugzeuginnenausstattungsbauteilsystem nach einem der Ansprüche 6 bis 10, **dadurch gekennzeichnet, dass** das Verbindungselement/die Verbindungselemente (34a-d) des ersten Flugzeuginnenausstattungsbautells (10a) und/oder das Verbindungselement/die Verbindungselemente (34a-d) des zweiten Flugzeuginnenausstattungsbauteils (10b) zumindest teilweise aus einem gasundurchlässigen und/oder aus einem durchbrandfesten Material besteht/bestehen, und/oder **dadurch gekennzeichnet, dass** das Verbindungselement/die Verbindungselemente (34a-d) des ersten Flugzeuginnenausstattungsbauteils (10a) und/oder das Verbindungselement/die Verbindungselemente (34a-d) des zweiten Flugzeuginnenausstattungsbauteils (10b) zumindest teilweise aus einem thermoplastischen Material, ausgewählt aus der Gruppe umfassend Polyphenylsulfide, Polyethersulfone und/oder Polyetherketone besteht/bestehen.

12. Flugzeuginnenausstattungsbauteilsystem nach einem der Ansprüche 6 bis 11, **dadurch gekennzeichnet, dass** das Verbindungselement/die Verbindungselemente (34a-d) des ersten Flugzeuginnenausstattungsbauteils (10a) durch thermoplastisches Verschweißen an dem ersten Flugzeuginnenausstattungsbauteil (10a) angebracht ist/sind und/oder dass das Verbindungselement/die Verbindungselemente (34a-d) des zweiten Flugzeuginnenausstattungsbauteils (10b) durch thermoplastisches Verschweißen an dem zweiten Flugzeuginnenausstattungsbauteil (10b) angebracht ist/sind.

13. Flugzeuginnenausstattungsbauteilsystem nach einem der Ansprüche 6 bis 12, **dadurch gekennzeichnet, dass** das Verbindungselement/die Verbindungselemente (34a-d) des ersten Flugzeuginnenausstattungsbauteils (10a) und/oder das Verbindungselement/die Verbindungselemente (34a-d) des zweiten Flugzeuginnenausstattungsbauteils (10b) mit einem intumeszenten Lack beschichtet ist/sind.

14. Verwendung des Flugzeuginnenausstattungsbauteils (10) nach einem der Ansprüche 1 bis 5 und/oder des Flugzeuginnenausstattungsbauteilsystems (32) nach einem der Ansprüche 6 bis 13 als Verkleidungselement in einem Frachtraumbereich eines Verkehrsflugzeugs.

## Claims

1. An aircraft interior equipment component (10) with:
- a frame (12), and
- a sheetlike section (18) which is supported by the frame (12) and is formed by a flexible and/or foldable membrane (20) connected to the frame (12),
**characterized in that** the frame (12) extends continuously along an outer circumference of the membrane (20) and **in that** the frame (12) comprises two rigid frame sections (14a-h) and a joint (16a-h) connecting the rigid frame sections (14a-h) to one another.

2. An aircraft interior equipment component according to Claim 1,
**characterised in that** the aircraft interior equipment component (10) comprises a plurality of joints (16a-h) which connect two frame sections (14a-h) to one another, which joints are arranged on an imaginary fold line (24a-d) about which the aircraft interior equipment component (10) can be bent and/or folded and/or **in that** the joint(s) (16a-h) is/are formed by cutouts in the frame (12), by non-reinforced, flexible and/or foldable sections of the frame (12), and/or by regions of the membrane (20) which are formed in one piece with the sheetlike section (18) which is supported by the frame (12).

3. An aircraft interior equipment component according to Claim 1 or 2, **characterised in that** the frame (12) extends substantially continuously along the outer periphery (22) of the aircraft interior equipment component (10).

4. An aircraft interior equipment component according to one of Claims 1 to 3, **characterised by** a non-flexible and/or non-foldable reinforcement structure (26) which is connected to the membrane (20) and extends over a partial surface of the sheetlike section (18) which is supported by the frame (12).

5. An aircraft interior equipment component according to one of Claims 1 to 4, **characterised in that** the frame (12), the joint(s) (16a-h), the membrane (20) and/or the reinforcement structure (26) consist(s) at least partially of a gas-impermeable material and/or of a burn-through-resistant material, and/or **characterised in that** the frame (12), the joint(s) (16a-h), the membrane (20) and/or the reinforcement structure (26) consist(s) at least partially of a thermoplastic material, selected from a group comprising polyphenyl sulfides, polyether sulfones and/or polyether ketones, and/or **characterised in that** the frame (12), the joint(s) (16a-h), the membrane (20) and/or the reinforcement structure (26) consist(s) at least partially of a material reinforced with glass fibres, basalt fibres, aramid fibres and/or carbon fibres, and/or **characterised in that** the frame (12) and/or the reinforcement structure (26) is/are connected to the membrane (20) by thermoplastic welding in punctiform manner, linearly and/or two-dimensionally, and/or **characterised in that** the reinforcement structure (26) is in the form of a grid.

6. An aircraft interior equipment component system (32) with:
- a first aircraft interior equipment component (10a), to which a connecting element (34a-b) is fastened, and
- a second aircraft interior equipment component (10b), to which a connecting element (34a-d) which is complementary to the connecting element (34a-d) of the first aircraft interior equipment component (10a) is fastened, the connecting element (34a-d) of the first aircraft interior equipment component (10a) and the connecting element (34a-d) of the second aircraft interior equipment component (10b) being arranged, upon connection of the first aircraft interior equipment component (10a) to the second aircraft interior equipment component (10b), to engage with one another in order to form a connecting seam which is impermeable to gas, wherein the first aircraft interior equipment component (10a) and/or the second aircraft interior equipment component (10b) is/are an aircraft interior equipment component (10) according to one of claims 1 to 5.

7. An aircraft interior equipment component system according to Claim 6, **characterised in that** at least one further connecting element (34a-d) is fastened to the first aircraft interior equipment component (10a), which further element is arranged, upon connection of the first aircraft interior equipment component (10a) to a further aircraft interior equipment component and/or an aircraft structure (68), to engage with a complementary connecting element (34a-d) of the further aircraft interior equipment component and/or the aircraft structure (68) in order to form a connecting seam which is impermeable to gas, and/or **in that** at least one further connecting element (34a-d) is fastened to the second aircraft interior equipment component (10b), which further element is arranged, upon connection of the second aircraft interior equipment component (10b) to a further aircraft interior equipment component (10c) and/or an aircraft structure (68), to engage with a complementary connecting element (34a-d) of the further aircraft interior equipment component (10c) and/or the aircraft structure (68) in order to form a connecting seam which is impermeable to gas.

8. An aircraft interior equipment component system according to Claim 6 or 7, **characterised in that** the connecting element(s) (34a-d) of the first aircraft interior equipment component (10b) and/or of the second aircraft interior equipment component (10b) is/are formed as a tongue tab (36) of a pressure closure strip and/or as a groove tab (38) of a pressure closure strip, and/or **characterised in that** the connecting element(s) (34a-d) of the first aircraft interior equipment component (10a) extend(s) along at least a partial section (40a-d) of an outer periphery (22) of the first aircraft interior equipment component (10a) and/or **in that** the connecting element(s) (34a-d) of the second aircraft interior equipment component (10b) extend(s) along at least a partial section (40a-d) of an outer periphery (22) of the second aircraft interior equipment component (10b).

9. An aircraft interior equipment component system according to one of Claims 6 to 8,
**characterised in that** the first aircraft interior equipment component (10a) is penetrated by at least one bore (50) which is arranged in an edge region (52) of the first aircraft interior equipment component which adjoins the outer periphery (22) of the first aircraft interior equipment component (10a), with a slot (54) which reaches as far as the outer periphery (22) of the first aircraft interior equipment component (10a) extending from the bore (50), and/or **in that** the second aircraft interior equipment component (10b) is penetrated by at least one bore (50) which is arranged in an edge region of the second aircraft interior equipment component (10b) which adjoins the outer periphery (22) of the second aircraft interior equipment component (10b), with a slot (54) which reaches as far as the outer periphery (22) of the second aircraft interior equipment component (10b) extending from the bore (50).

10. An aircraft interior equipment component system according to one of Claims 6 to 9,
**characterised by** a coupling device (58) with:
- a coupling pin (60),
- a coupling eye (62) which is arranged to receive the coupling pin (60), and
- a sealing disc (64), in which an opening (66) which can be penetrated by the coupling pin (60) is formed.

11. An aircraft interior equipment component system according to one of Claims 6 to 10,
**characterised in that** the connecting element(s) (34a-d) of the first aircraft interior equipment component (10a) and/or the connecting element(s) (34a-d) of the second aircraft interior equipment component (10b) consist(s) at least partially of a gas-impermeable material and/or of a burn-through-resistant material, and/or **characterised in that** the connecting element(s) (34a-d) of the first aircraft interior equipment component (10a) and/or the connecting element(s) (34a-d) of the second aircraft interior equipment component (10b) consist(s) at least partially of a thermoplastic material, selected from the group comprising polyphenyl sulfides, polyether sulfones and/or polyether ketones.

12. An aircraft interior equipment component system according to one of Claims 6 to 12,
**characterised in that** the connecting element(s) (34a-d) of the first aircraft interior equipment component (10a) is/are attached to the first aircraft interior equipment component (10a) by thermoplastic welding and/or **in that** the connecting element(s) (34a-d) of the second aircraft interior equipment component (10b) is/are attached to the second aircraft interior equipment component (10b) by thermoplastic welding.

13. An aircraft interior equipment component system according to one of Claims 6 to 12,
**characterised in that** the connecting element(s) (34a-d) of the first aircraft interior equipment component (10a) and/or the connecting element(s) (34a-d) of the second aircraft interior equipment component (10b) is/are coated with an intumescent paint.

14. Use of the aircraft interior equipment component (10) according to one of Claims 1 to 5 and/or of the aircraft interior equipment component system (32) according to one of Claims 6 to 13 as a panelling element in a cargo-hold region of a commercial aircraft.

## Revendications

1. Elément d'équipement intérieur d'avion (10), comprenant :
- un cadre (12) et
- une partie de surface (18), qui est portée par le cadre (12), formée par une membrane souple et/ou pliable (20) et reliée au cadre (12),
**caractérisé en ce que** le cadre (12) s'étend de manière continue le long d'une circonférence extérieure de la membrane (20),
et que le cadre (12) présente deux parties de cadre rigides (14a à 14h) ainsi qu'une articulation (16a à 16h) reliant entre elles lesdites deux parties de cadre rigides (14a à 14h).

2. Elément d'équipement intérieur d'avion selon la revendication 1,
**caractérisé en ce que** l'élément d'équipement intérieur d'avion (10) comporte une pluralité d'articulations (16a à 16h) reliant deux parties de cadre rigides (14a à 14h) et disposées sur une ligne de pliage (24à à 24d) imaginaire autour de laquelle l'élément d'équipement intérieur d'avion (10) peut être plié et/ou replié, et/ou **caractérisé en ce que** l'articulation/les articulations (16a à 16h) est/sont formée(s) par des évidements ménagés dans le cadre (12), par des parties non renforcées souples et/ou pliables, et/ou par des zones de la membrane (20) formées d'un seul tenant avec la partie de surface (18) portée par le cadre (12).

3. Elément d'équipement intérieur d'avion selon la revendication 1 ou 2, **caractérisé en ce que** le cadre (12) s'étend pour l'essentiel de manière continue le long du pourtour extérieur (22) de l'élément d'équipement intérieur d'avion (10).

4. Elément d'équipement intérieur d'avion selon l'une des revendications 1 à 3, **caractérisé par** une structure de renforcement (26) non souple et/ou non pliable laquelle est reliée à la membrane (20) et s'étend sur une sur une surface partielle de la partie de surface (18) portée par le cadre (12).

5. Elément d'équipement intérieur d'avion selon l'une des revendications 1 à 4, **caractérisé en ce que** le cadre (12), l'articulation/les articulations (16a à 16h), la membrane (20) et/ou la structure de renforcement (26) sont composés au moins pour partie d'une matière imperméable au gaz et/ou d'une matière résistante au feu, et/ou **caractérisé en ce que** le cadre (12), l'articulation/les articulations (16a à 16h), la membrane (20) et/ou la structure de renforcement (26) sont composés au moins pour partie d'une matière thermoplastique, choisie dans le groupe comprenant les polysulfures de phénylène, les polyéthersulfones et/ou les polyéthercétones, et/ou **caractérisé en ce que** le cadre (12), l'articulation/les articulations (16a à 16h), la membrane (20) et/ou la structure de renforcement (26) sont composés au moins pour partie d'une matière renforcée par des fibres de verre, de basalte, d'aramide et/ou de carbone, et/ou **caractérisé en ce que** le cadre (12) et/ou la structure de renforcement (26) est/sont relié(s) ponctuellement, de manière linéaire ou de manière planiforme à la membrane (20) par soudage thermoplastique, et/ou **caractérisé en ce que** la structure de renforcement (26) est réalisée sous la forme d'une grille.

6. Système d'éléments d'équipement intérieur d'avion (32), comprenant :
- un premier élément d'équipement intérieur d'avion (10a) sur lequel est fixé un élément d'assemblage (34a à b) et
- un deuxième élément d'équipement intérieur d'avion (10b) sur lequel est fixé un élément d'assemblage (34a à 34d) complémentaire à l'élément d'assemblage (34a à 34d) du premier élément d'équipement intérieur d'avion (10a), l'élément d'assemblage (34a à d) du premier élément d'équipement intérieur d'avion (10a) et l'élément d'assemblage (34a à 34d) du deuxième élément d'équipement intérieur d'avion (10b) étant conçus pour venir en prise mutuelle lorsque le premier élément d'équipement intérieur d'avion (10a) est relié au deuxième élément d'équipement intérieur d'avion (10b) pour former une jointure imperméable au gaz, et le premier élément d'équipement intérieur d'avion (10a) et/ou le deuxième élément d'équipement intérieur d'avion (10b) étant un élément d'équipement intérieur d'avion (10) selon l'une des revendications 1 à 5.

7. Système d'éléments d'équipement intérieur d'avion selon la revendication 6, **caractérisé en ce qu'**est fixé sur le premier élément d'équipement intérieur d'avion (10a) un moins autre élément d'assemblage (34a à 34d) qui est conçu pour venir en prise avec un élément d'assemblage (34a à 34d) complémentaire dudit autre élément d'équipement intérieur d'avion et/ou la structure d'avion lorsque le premier élément d'équipement intérieur d'avion (10a) est relié à un autre élément d'équipement intérieur d'avion et/ou à une structure d'avion (68) pour former une jointure imperméable au gaz, et/ou **en ce qu'**est fixé sur le deuxième élément d'équipement intérieur d'avion (10b) un moins autre élément d'assemblage (34a à 34d) qui est conçu pour venir en prise avec un élément d'assemblage (34a à 34d) complémentaire de l'autre élément d'équipement intérieur d'avion (10c) et/ou la structure d'avion (68) lorsque le deuxième élément d'équipement intérieur d'avion (10b) est relié à un autre élément d'équipement intérieur d'avion (10c) et/ou à une structure d'avion (68) pour former une jointure imperméable au gaz.

8. Système d'éléments d'équipement intérieur d'avion selon la revendication 6 ou 7, **caractérisé en ce que** l'élément d'assemblage/les éléments d'assemblage (34a à 34d) du premier élément d'équipement intérieur d'avion (10a) et/ou du deuxième élément d'équipement intérieur d'avion (10b) est/sont réalisé(s) sous la forme d'une patte formant ressort (36) d'une bande de fermeture par pression et/ou sous la forme d'une attache à gorge (38) d'une bande de fermeture par pression, et/ou **caractérisé en ce que** l'élément d'assemblage/les éléments d'assemblage (34a à 34d) du premier élément d'équipement intérieur d'avion (10a) s'étend/s'étendent le long d'au moins une partie (40a à 40d) du pourtour extérieur (22) du premier élément d'équipement intérieur d'avion (10a), et/ou que l'élément d'assemblage/les éléments d'assemblage (34a à 34d) du deuxième élément d'équipement intérieur d'avion (10b) s'étend/s'étendent le long d'au moins une partie (40a à 40d) du pourtour extérieur (22) du deuxième élément d'équipement intérieur d'avion (10b).

9. Système d'éléments d'équipement intérieur d'avion selon l'une des revendications 6 à 8, **caractérisé en ce que** le premier élément d'équipement intérieur d'avion (10a) est traversé par au moins un alésage (50) qui est disposé dans une zone marginale du premier élément d'équipement intérieur d'avion et adjacente au pourtour extérieur (22) du premier élément d'équipement intérieur d'avion (10a), une fente (54) s'étendant depuis l'alésage (50) jusqu'au pourtour extérieur (22) du premier élément d'équipement intérieur d'avion (10a), et/ou **en ce que** le deuxième élément d'équipement intérieur d'avion (10b) est traversé par au moins un alésage (50) qui est disposé dans une zone marginale du deuxième élément d'équipement intérieur d'avion (10b) et adjacente au pourtour extérieur (22) du deuxième élément d'équipement intérieur d'avion(10b), une fente (54) s'étendant depuis l'alésage (50) jusqu'au pourtour extérieur (22) du deuxième élément d'équipement intérieur d'avion (10b).

10. Système d'éléments d'équipement intérieur d'avion selon l'une des revendications 6 à 9, **caractérisé par** un dispositif d'accouplement (58) comprenant :
- un tenon d'accouplement (60),
- un oeillet d'accouplement (62) conçu pour recevoir le tenon d'accouplement (60), et
- une rondelle d'étanchéité (64) dans laquelle est ménagé un orifice (66) destiné à laisser passer le tenon d'accouplement (60).

11. Système d'éléments d'équipement intérieur d'avion selon l'une des revendications 6 à 10, **caractérisé en ce que** l'élément d'assemblage/les éléments d'assemblage (34a à 34d) du premier élément d'équipement intérieur d'avion (10a) et/ou l'élément d'assemblage/les éléments d'assemblage (34a à 34d) du deuxième élément d'équipement intérieur d'avion (10b) est/sont composé(s) au moins pour partie d'une matière imperméable au gaz et/ou d'une matière résistante au feu, et/ou **caractérisé en ce que** l'élément d'assemblage/les éléments d'assemblage (34a à 34d) du premier élément d'équipement intérieur d'avion (10a) et/ou l'élément d'assemblage/les éléments d'assemblage (34a à d) du deuxième élément d'équipement intérieur d'avion (10b) est/sont composé(s) au moins pour partie d'une matière thermoplastique choisie dans le groupe comprenant les polysulfures de phénylène, les polyéthersulfones et/ou les polyéthercétones.

12. Système d'éléments d'équipement intérieur d'avion selon l'une des revendications 6 à 11, **caractérisé en ce que** l'élément d'assemblage/les éléments d'assemblage (34a à 34d) du premier élément d'équipement intérieur d'avion (10a) est/sont monté(s) par soudage thermoplastique sur le premier élément d'équipement intérieur d'avion (10a) et/ou que l'élément d'assemblage/les éléments d'assemblage (34a à 34d) du deuxième élément d'équipement intérieur d'avion (10b) est/sont monté(s) par soudage thermoplastique sur le deuxième élément d'équipement intérieur d'avion (10b).

13. Système d'éléments d'équipement intérieur d'avion selon l'une des revendications 6 à 12, **caractérisé en ce que** l'élément d'assemblage/les éléments d'assemblage (34a à 34d) du premier élément d'équipement intérieur d'avion (10a) et/ou l'élément d'assemblage/les éléments d'assemblage (34a à 34d) du deuxième élément d'équipement intérieur d'avion (10b) est/sont revêtu(s) d'un vernis intumescent.

14. Utilisation de l'élément d'équipement intérieur d'avion (10) selon l'une des revendications 1 à 5 et/ou du système d'éléments d'équipement intérieur d'avion (32) selon l'une des revendications 6 à 13, comme élément de revêtement à l'intérieur d'une partie de la soute d'un avion de ligne.
